# EUROPEAN PATENT SPECIFICATION

(11) **EP 4 380 415 B1**
(45) Date of publication and mention of the grant of the patent: **09.07.2025**
(21) Application number: 22754567.0
(22) Date of filing: 03.08.2022
(51) Int. Cl.: A47J 31/44

(54) **BEVERAGE DISPENSING MACHINE**
GETRÄNKEAUSGABEVORRICHTUNG
DISTRIBUTEUR DE BOISSONS

(30) Priority: 03.08.2021 IT 202100020897
(43) Date of publication of application: 12.06.2024
(73) Proprietor: Illycaffe' S.p.A., 34147 Trieste (IT)
(72) Inventor: RONCALI, Eugenio, 34147 Trieste (IT); CESCUTTI, Francesco, 34147 Trieste (IT); BEVILACQUA, Roberto, 34147 Trieste (IT); BERTOLDI, Vanessa, 34147 Trieste (IT)
(74) Representative: Crippa, Paolo Ernesto
(86) International application number: PCT/IB2022/057184
(87) International publication number: WO 2023/012677

(56) References cited:
- EP-B1- 0 585 607
- EP-B1- 2 675 327
- CN-A- 111 343 889
- US-A1- 2021 169 265

## Description

### Field of the invention

The present invention relates to a beverage dispensing machine.

In particular, the field of the invention relates to beverage dispensing machines having at least one support for keeping a cup or a small cup at the right height, below a beverage dispensing mouth.

For the purposes of the present description, the term "beverage" is understood to include any liquid food substance, such as tea, coffee, hot or cold chocolate, milk, soup, etc.

### Background art

Some machines for preparing beverages use capsules containing ingredients to be extracted or dissolved; in other machines, the ingredients are stored and dosed automatically in the machine or added at the time of preparing the beverage in a filter inserted into a filter holder couplable to the machine.

Most beverage machines have dispensing means inside a housing, comprising a pump for liquids, usually water, which pumps the liquid from a source of cold water, heating means for heating the liquid, such as a heating resistance, a thermal block or the like, or a heated tank, even pressurized; as well as an infusion unit in which an ingredient is infused with a liquid, usually water, or a mixing unit in which the ingredients are mixed, and a beverage outlet for dispensing the extracted beverage.

Typically, the beverage outlet is located above a grille for supporting a cup or another container below the outlet and for the passage of any drops in a collection tray located below the grille.

Such solutions are described, for example, in US2021/169265A1, EP1440639**,** EP1095605**,** EP1731065**,** EP1867260**,** US5353692**,** WO2009/013778**,** WO2009/074557**,** WO2009/074559**.** WO2009/135869 and EP2592980**.**

For example, EP 1 440 639 describes a beverage machine comprising a support for containers having a hollow interior forming a dripping tray. An upper surface of the tray is provided with a grille on which a container is placeable. The drip collecting tray is removable from the housing for facilitating the emptying of the water collected.

The drip-collecting tray devices with supports for cups are well-known in the art, e.g., from US2021169265, CN111343889, EP0585607 and EP2675327.

Devices of this type further equipped to allow adjusting the vertical position of different-sized cups below the beverage outlet also exist.

For example, EP 0 549 887 and US 5,161,455 describe devices with an adjustable cup support for large and small containers.

Document US 5.353.692 describes a beverage vending machine.

A retractable support element is provided below the dispensing mouth for positioning small cups exactly below the beverage outlet. This retractable support is made as a grille to allow the passage of drops up to the shutter.

EP 1 731 065 describes a beverage machine having a drip tray device positioned below a beverage outlet.

This device has a first support grille for a first beverage container covering a drop collection tray or collection tray. The first support grille is removable from the drop collection tray to provide access to a second underlying support for supporting a larger cup below the outlet.

EP 1 867 260 describes a drip tray with a support for a cup, which is movably mounted, generally halfway, onto a beverage machine.

The support of the cup has an operating position extending horizontally for positioning a small cup below the beverage outlet of the machine and can be rotated upwards against the main body of the machine or moved in another manner so as to give sufficient space for positioning a large cup below the beverage outlet on a support. Likewise, WO 2009/074557 describes a machine for preparing beverages with a drip tray system positioned below the beverage outlet. The drop collection tray has an arrangement for evacuating the liquid and supporting a cup below the outlet, and has an extension for hygienically supporting the cups in use. WO 2009/016681 describes a beverage dispensing machine having an outlet for dispensing said beverage; a movable support inside such a machine from a position for supporting a smaller cup below the outlet to a position for positioning a larger cup below the outlet; where the support is rotatable from said position for a smaller cup to said position for a larger cup along a generally vertical axis.

EP2592980 relates to a beverage dispensing machine.

The machine has: an outlet for dispensing such a beverage; a movable support inside such a machine from a position for supporting a smaller cup below the outlet to a position for positioning a larger cup below the outlet; and means for stopping the movement of the support.

The principle of using a movable support for positioning different-sized cups in the machine is known, for example from EP 1 731 065**,** EP 1 867 260**,** EP 1 811 881 and WO 2009/074557**.**

According to EP2592980 stop means are provided, comprising means for securing the support when placed below the dispensing mouth or when moved away therefrom.

Thus, the support is not simply moved to the position or aforesaid positions more or less freely and stopped hitting a support or end stop, but the support is secured with appropriate means in a position such as to prevent an undesired movement thereof outside this position.

These means typically serve to ensure the support in such a position and can provide the user with a feedback, e.g., a sensorial tactile feedback, to indicate that the support has been correctly brought to this position.

Despite being particularly satisfying from several points of view, these known solutions do not allow determining a precise support position for the smaller cups, which must be closer to the beverage dispensing mouth, where this is accidentally moved or impacted by a machine user.

In fact, if the user impacts the movable support for the small cups made according to any one of the prior art techniques, this support would either move without resistance or, upon overcoming a minimum resistance of the locking device, it would start to rotate or translate.

In particular, this is the case if the support for the smaller cups is impacted from the position thereof deviated from below the beverage dispensing nozzle. In many prior art solutions, this would even inexorably fall exactly in the position below the beverage dispensing nozzle, even if this would result in an impact with the larger cup already present below the nozzle.

Therefore, the need is felt for a beverage dispensing machine comprising a movable support capable of positioning itself in the desired position, even if accidentally moved or impacted by a small travel being insufficient to bring it to a second desired position.

### Solution

Therefore, it is the object of the present invention to conceive a beverage dispensing machine capable of meeting the aforesaid needs and overcoming the drawbacks of the prior art.

These and other objects are achieved by a machine according to claim 1. Some advantageous embodiments are the subject of the dependent claims.

By virtue of the suggested solutions described below, it is possible to have a beverage dispensing machine in which the support of a container to be arranged in a first position below the beverage outlet device is on a raised plane with respect to the dispensing plane defined by the machine base device or tray, but it is also possible to rotate this movable support and bring it to a second position deviated from said beverage outlet device, for example to make space for a larger container. Furthermore, these two positions, referred to as first and second positions, are stable positions, where the term "stable" means that small movements of the movable support from said first or second stable position, upon stopping the external forces, determine the return of the movable support to the starting stable position, at least until an unstable position placed between said first and second stable positions is passed, beyond which the movable support continues the travel thereof to the other stable position close to the starting stable position.

Therefore, it follows how this solution allows having a movable support which stays in stable automatically reachable or preservable positions, where erroneously moved.

These stable positions are particularly useful for users of professional machines above all, allowing the movable support to stay in a first stable position below the beverage outlet device, even if accidentally impacted, without wasting time for repositioning it correctly, while being easily movable to a second stable position far from the beverage outlet device so as to free up a wide space for larger containers or for cleaning the dispensing plane of the base device or tray or cover thereof.

### Figures

Further features and advantages of the device according to the invention will become apparent from the description provided below of preferred exemplary embodiments thereof, given by way of non-limiting example, with reference to the accompanying drawings, in which:

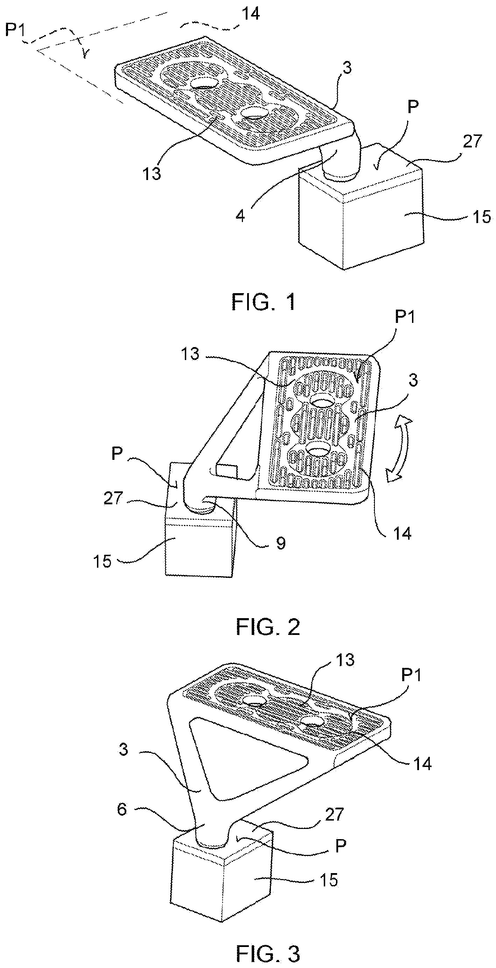

- figure 1 shows a partial axonometric view of a portion of a machine base device or tray in which a movable support is rotatably accommodated;
- figure 2 shows another axonometric view of the solution in figure 1, where the movable support is rotated with respect to the position in figure 1 by about 90DEG;
- figure 3 shows another axonometric view of the solution in figure 1, where the movable support is rotated with respect to the position in figure 1 by about 180DEG;

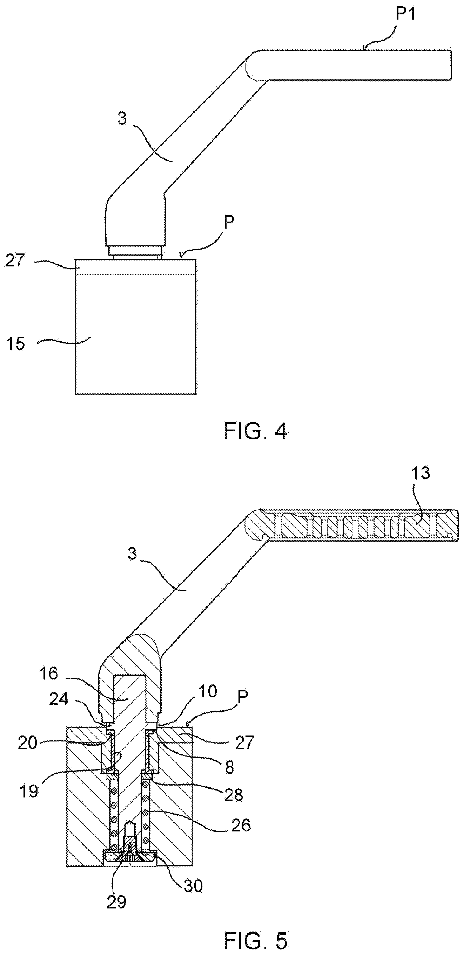

- figure 4 depicts a side view of the solution in figure 2;
- figure 5 shows a partially sectioned side section view of the solution in figure 4;

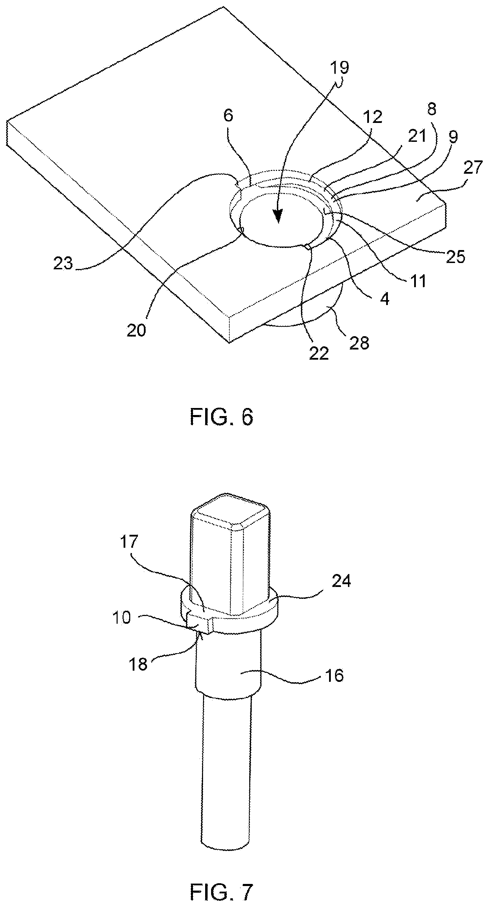

- figure 6 depicts an axonometric view of a portion of a cover of a machine base device or tray, where the shaft seat and the cam device are in the foreground;
- figure 7 shows an axonometric view of a rotation shaft of a movable support;

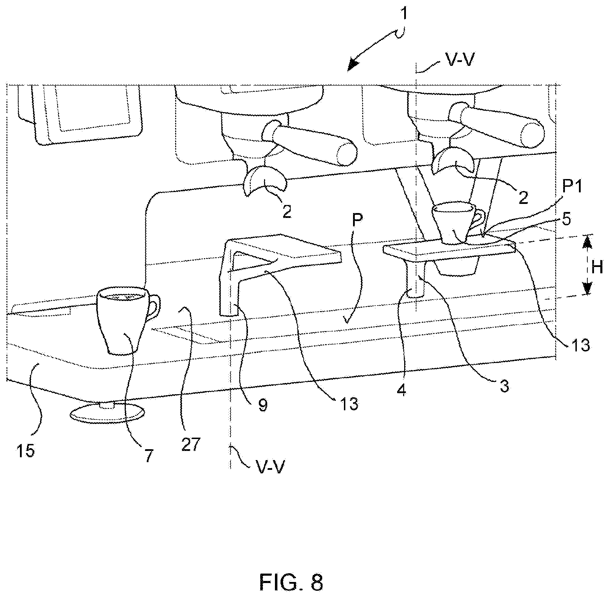

- figure 8 depicts an axonometric view of a portion of a beverage dispensing machine of the professional type with two dispensing units on which filter holders are mounted and below which, supported by a machine base device or tray or dispensing plane, there are two movable supports, one for each dispensing unit, a first one, that in the foreground, rotated by 90 DEG, and a second one placed below the beverage outlet device, i.e., the beverage dispensing nozzles.

### Description of some preferred embodiments

Elements or parts of elements common to the embodiments described below will be indicated using the same reference numeral.

With reference to the figures, a beverage dispensing machine 1 comprises at least one outlet device 2, or dispensing nozzle, for dispensing said beverage.

Said machine further comprises at least one movable support 3 for supporting a container 5, 7.

Said movable support 3 is movably supported by said beverage dispensing machine 1 at least from a first small container position 4, at least partially placed below said outlet device 2 so as to receive said beverage in a small container 5 resting on said movable support 3, to a second large container position 7 moved away from below said outlet device 2, so as to position a large container 7 below said outlet device 2.

Advantageously, said machine comprises at least one cam device 8.

Said at least one cam device 8 guides the rotation of said at least one movable support 3 between said first small container position 4, or first stable position, and said second large container position 7, or second stable position, and vice versa.

Said first small container position 4 and said second large container position 7 are stable positions separated from each other by at least one unstable position 9, which, without external forces, causes said at least one movable support 3 to return to the closest stable position between said first small container position 4 and said second large container position 7.

According to an embodiment, said at least one movable support 3 comprises a follower 10 cooperating with said at least one cam device 8. Said at least one cam device 8 comprises inclined planes 11, 12, joining said first and second stable positions 4, 6 to said interposed unstable position 9. According to an embodiment, where said unstable position 9 is arranged higher up, i.e., closer to said outlet device 2 and said first and second stable positions 4, 6 are arranged lower down, i.e., further from said outlet device 2.

Said follower 10, at least during the rotation of said at least one movable support 3, cooperates with said inclined planes 11, 12.

By virtue of this embodiment, the cam is a cam with a work surface orthogonal to the vertical direction V-V, or direction of the action of the force of gravity. Thereby, even just the weight of the movable support 3 causes the follower 10 to slide on the inclined planes and reach the closest stable position 4 or 6, which is further down with respect to the instable position 9 which, according to an embodiment, is only one line or a connection, the line dividing the two inclined planes 11, 12 leading to the stable positions 4, 6.

According to an embodiment, said at least one movable support 3 is constantly biased towards said first or second stable position 4, 6. For example, a spring 26 elastically biases said movable support 3 against said inclined planes 11, 12, so that the follower 10 is constantly biased towards the lowest points of the cam device 8, i.e., the first and second stable positions 4, 6.

According to an embodiment, said machine 1 comprises at least one spring 26 which constantly urges said at least one movable support 3 towards said first and second stable positions 4, 6.

According to an embodiment, said spring 26 constantly urges said at least one movable support 3 in the vertical direction V-V and away from said beverage outlet device 2.

According to an embodiment, said at least one movable support 3 is rotatable about a predefined vertical axis V-V.

Said at least one movable support 3 comprises a cup-holder grille 13 forming a horizontal support plane 14 placed on a predefined plane P1 for stably supporting said small container 5.

Said horizontal support plane 14 is placed at a predefined height H from at least one machine base device 15, or machine tray 15, e.g., from the upper plane or dispensing plane P thereof.

According to an embodiment, said machine 1 comprises at least one machine base device 15 placed below said outlet device 2 arranged at least at a distance H adapted to interpose said large container 7 between said machine base device 15 and said outlet device 2.

According to an embodiment, said at least one movable support 3 comprises a rotation shaft 16 defining a vertical rotation axis V-V.

Said rotation shaft 16 comprises at least one projection or follower 17.

Said projection or follower 17 comprises at least one follower support surface 18.

Said follower support surface 18 is arranged orthogonally to said vertical rotation axis V-V facing away from the beverage outlet device 2.

Said machine 1 further comprises at least one machine based device or tray 15.

Said machine base device or tray 15 comprises at least one shaft seat 19 delimited by a seat edge 20.

Said seat edge 20 comprises said cam device 8 forming a cam path or cam profile 21 having a surface orthogonal to said vertical rotation axis V-V and facing said beverage outlet device 2.

According to an embodiment, said rotation shaft 16 comprises an annular support element 24 from which said at least one projection or follower 17 protrudes.

Said cam device 8 is internally delimited by a flat annular surface 25 for stably supporting said annular support element 24 when said rotation shaft 16 is arranged in one of said first or second stable position 4, 6.

According to an embodiment, said cam device 8 comprises end-stop surfaces 22, 23 forming a stop abutment for the rotation of said at least one movable support 3 delimiting said first and second stable positions 4, 6. According to an embodiment, end-stop surfaces 22, 23 are placed at the base of said inclined planes 11, 12, possibly leaving a short flat cam path 21 of the same width as the width of said follower 10.

According to an embodiment, said machine base device 15 comprises at least one cover 27.

Said cover 27 comprises said shaft seat 19.

Said cover 27 comprises said cam device 8.

Said cover 27 further comprises an undercut surface 28 facing away from said beverage outlet device 2.

Said rotation shaft 16 comprises a lower free end 29.

Said lower free end 29 comprises an enlarged head 30 protruding transversely to said vertical rotation axis V-V. According to an embodiment, the enlarged head 30 is made in a separate piece with respect to said rotation shaft 16, and is connected, for example, to said shaft by means of a screw.

According to an embodiment, a preloaded spring 26 is provided interposed between said undercut surface 28 and said enlarged head 30 urging said projection or follower 17 against said cam device 8 so as to urge said movable support 3 towards said first and second stable positions 4, 6.

In order to meet specific, contingent needs, those skilled in the art can make several changes and adaptations to the above-described embodiments, and can replace elements with others which are functionally equivalent, without however departing from the scope of the following claims.

### LIST OF REFERENCE SIGNS

- 1: beverage dispensing machine
- 2: beverage outlet device
- 3: movable support
- 4: first small container position or first stable position
- 5: small container
- 6: second large container position or second stable position
- 7: large container
- 8: cam device
- 9: unstable position
- 10: follower or follower projection
- 11: inclined planes
- 12: inclined planes
- 13: cup-holder grille
- 14: horizontal support plane
- 15: at least one machine base device or tray
- 16: rotation shaft
- 17: projection or follower
- 18: follower support surface
- 19: shaft seat
- 20: seat edge
- 21: cam path or cam profile
- 22: end-stop surface
- 23: end-stop surface
- 24: annular support element
- 25: flat annular surface
- 26: spring
- 27: cover
- 28: undercut surface
- 29: lower free end
- 30: enlarged head
- V-V: vertical axis
- P: dispensing plane
- H: distance between horizontal support plane and dispensing plane of the machine base device or tray
- P1: plane of the cup-holder grille of the horizontal support plane

## Claims

1. A beverage dispensing machine (1), comprising:
- at least one outlet device (2) for dispensing said beverage;
- at least one movable support (3) for supporting a container (5, 7); said movable support (3) movably supporting said beverage dispensing machine (1) at least from a first small container position (4) at least partially placed below said outlet device (2) for receiving said beverage in a small container (5) resting on said movable support (3), to a second large container position (6) moved away from below said outlet device (2) for positioning a large container (7) below said outlet device (2);
wherein machine comprises at least one cam device (8); wherein said at least one cam device (8) guides the rotation of said at least one movable support (3) between said first small container position (4) and said second large container position (6), and vice versa;
**characterized in that** said first small container position (4) and said second large container position (6) are stable positions separated from each other by at least one unstable position (9) which, without external forces, causes said at least one movable support (3) to return to the closest stable position between said first small container position (4) and said second large container position (6).

2. A machine (1) according to claim 1, wherein
- said at least one movable support (3) comprises a follower (10) cooperating with said at least one cam device (8); and wherein
- said at least one cam device (8) comprises inclined planes (11, 12) joining said first and second stable positions (4, 6) to said interposed unstable position (9); and/or wherein said unstable position (9) is arranged higher up, i.e., closer to said outlet device (2), and said first and second stable positions (4, 6) are arranged lower down, i.e., further from said outlet device (2); and/or wherein
- said follower (10), at least during the rotation of said at least one movable support (3), cooperates with said inclined planes (11, 12).

3. A machine (1) according to claim 1 or 2, wherein
- said at least one movable support (3) is constantly biased towards said first or second stable position (4, 6).

4. A machine (1), according to any one of the preceding claims, wherein
- said at least one movable support (3) is rotatable about a predefined vertical axis (V-V); and wherein
- said at least one movable support (3) comprises a cup-holder grille (13) forming a horizontal support plane (14) for stably supporting said small container (5); and wherein
- said horizontal support plane (14) is placed at a predefined height (H) from at least one machine base device (15), or machine tray (15).

5. A machine (1), according to any one of the preceding claims, wherein
- said at least one movable support (3) comprises a rotation shaft (16) defining a vertical rotation axis (V-V);
- said rotation shaft (16) comprises at least one projection or follower (17);
- said projection or follower (17) comprises at least one follower support surface (18), wherein said follower support surface (18) is arranged orthogonally to said vertical rotation axis (V-V) facing away from the beverage outlet device (2);
- said machine (1) further comprises at least one machine base device or tray (15);
- said machine base device or tray (15) comprises at least one shaft seat (19) delimited by a seat edge (20);
- said seat edge (20) comprises said cam device (8) forming a cam path or cam profile (21) having a surface orthogonal to said vertical rotation axis (V-V) and facing said beverage outlet device (2).

6. A machine (1) according to claim 5, wherein
- said rotation shaft (16) comprises an annular support element (24) from which said at least one projection or follower (17) protrudes; and wherein
- said cam device (8) is internally delimited by a flat annular surface (25) for stably supporting said annular support element (24) when said rotation shaft (16) is arranged in one of said first or second stable position (4, 6).

7. A machine (1), according to any one of the preceding claims, wherein
- said cam device (8) comprises end-stop surfaces (22, 23) forming a stop abutment for the rotation of said at least one movable support (3) delimiting said first and second stable positions (4, 6).

8. A machine (1), according to any one of the preceding claims, wherein
- said machine (1) comprises at least one spring (26) which constantly urges said at least one movable support (3) towards said first and second stable positions (4, 6); and/or wherein
- said spring (26) constantly urges said at least one movable support (3) in the vertical direction (V-V) away from said beverage outlet device (2).

9. A machine (1), according to any one of the preceding claims, wherein
- said machine (1) comprises at least one machine base device (15) placed below said outlet device (2) arranged at least at a distance (H) adapted to interpose said large container (7) between said machine base device (15) and said outlet device (2).

10. A machine (1) according to claim 9 when dependent on claim 5 or 6, wherein
- said machine base device (15) comprises at least one cover (27);
- said cover (27) comprises said shaft seat (19);
- said cover (27) comprises said cam device (8);
- said cover (27) further comprises an undercut surface (28) facing away from said beverage outlet device (2);
- said rotation shaft (16) comprises a lower free end (29);
- said lower free end (29) comprises an enlarged head (30) protruding transversely to said vertical rotation axis (V-V) ;
wherein
- a pre-loaded spring (26) is provided interposed between said undercut surface (28) and said enlarged head (30) urging said projection or follower (17) against said cam device (8) so as to urge said movable support (3) towards said first and second stable positions (4, 6).

## Patentansprüche

1. Getränkeausgabemaschine (1) mit:
- mindestens einer Auslassvorrichtung (2) zum Ausgeben des Getränks;
- mindestens einem bewegbaren Träger (3) zum Stützen eines Behälters (5, 7); wobei der bewegbare Träger (3) die Getränkeausgabevorrichtung (1) zumindest aus einer ersten Kleinbehälterposition (4), die zumindest teilweise unter der Auslassvorrichtung (2) angeordnet ist, um das Getränk in einem auf dem bewegbaren Träger (3) stehenden kleinen Behälter (5) aufzunehmen, in eine zweite Großbehälterposition (6) bewegbar stützt, welche von unterhalb der Auslassvorrichtung (2) weg bewegt ist, um einen großen Behälter (7) unter der Auslassvorrichtung zu positionieren;
wobei die Maschine mindestens eine Nockenvorrichtung (8) aufweist; wobei die mindestens eine Nockenvorrichtung (8) das Drehen des mindestens einen Trägers (3) zwischen der ersten Kleinbehälterposition (4) und der zweiten Großbehälterposition (6) und umgekehrt führt;
**dadurch gekennzeichnet, dass** die erste Kleinbehälterposition (4) und die zweite Großbehälterposition (6) stabile Positionen sind, welche voneinander durch mindestens eine instabile Position (9) getrennt sind, welche ohne externe Kräfte den mindestens einen bewegbaren Träger (3) veranlasst, in die nächstliegende stabile Position unter der ersten Kleinbehälterposition (4) und der zweiten Großbehälterposition (6) zurückzukehren.

2. Maschine (1) nach Anspruch 1, bei welcher
- der mindestens eine bewegbare Träger (3) einen Mitnehmer (10) aufweist, der mit der mindestens einen Nockenvorrichtung (8) zusammenwirkt; und wobei
- die mindestens eine Nockenvorrichtung (8) schräge Ebenen (11, 12) aufweist, welche die erste und die zweite stabile Position (4, 6) mit der dazwischenliegenden instabilen Position (9) verbinden; und/oder wobei die instabile Position (9) weiter oben, d.h. näher an der Auslassvorrichtung angeordnet ist, und die erste sowie die zweite stabile Position (4, 6) weiter unten, d.h. weiter von der Auslassvorrichtung (2) entfernt angeordnet sind; und/oder wobei
- der Mitnehmer (10) zumindest während des Drehens des mindestens einen bewegbaren Trägers (3) mit den schrägen Ebenen (11, 12) zusammenwirkt.

3. Maschine (1) nach Anspruch 1 oder 2, bei welcher
- der mindestens eine bewegbare Träger (3) konstant in Richtung der ersten oder der zweiten stabilen Position (4, 6) vorgespannt ist.

4. Maschine (1) nach einem der vorangehenden Ansprüche, bei welcher
- der mindestens eine bewegbare Träger (3) um eine vordefinierte vertikale Achse (V-V) drehbar ist; und wobei
- der mindestens eine bewegbare Träger (3) ein Tassenhaltergitter (13) aufweist, das eine horizontale Stützebene (14) zum stabilen Stützen eines kleinen Behälters (5) bildet; und wobei
- die horizontale Stützebene (14) auf einer vorbestimmten Höhe (H) gegenüber mindestens einer Maschinenbasisvorrichtung (15) oder einem Maschinentray (15) angeordnet ist.

5. Maschine (1) nach einem der vorangehenden Ansprüche, bei welcher
- der mindestens eine bewegbare Träger (3) eine Drehwelle (16) aufweist, die eine vertikale Drehachse (V-V) definiert;
- die Drehwelle (16) mindestens einen Vorsprung oder Mitnehmer (17) aufweist;
- der Vorsprung oder Mitnehmer (17) mindestens eine Mitnehmerstützfläche (18) aufweist, wobei die Mitnehmerstützfläche (18) orthogonal zu der vertikalen Drehachse (V-V) von der Getränkeauslassvorrichtung (2) abgewandt angeordnet ist;
- die Maschine (1) ferner mindestens eine Maschinenbasisvorrichtung oder ein Tray (15) aufweist;
- die Maschinenbasisvorrichtung oder das Tray (15) mindestens einen Wellensitz (19) aufweist, welcher durch einen Sitzrand (20) begrenzt ist;
- der Sitzrand (20) die Nockenvorrichtung (8) aufweist, die eine Nockenbahn oder ein Nockenprofil (21) mit einer Fläche bildet, welche orthogonal zu der vertikalen Drehachse (V-V) verläuft und der Getränkeauslassvorrichtung (2) zugewandt ist.

6. Maschine (1) nach Anspruch 5, bei welcher
- die Drehwelle (16) ein ringförmiges Stützelement (24) aufweist, von welchem der mindestens eine Vorsprung oder Mitnehmer (17) absteht; und wobei
- die Nockenvorrichtung (8) innen durch eine ebene ringförmige Fläche (25) begrenzt ist, um das ringförmige Stützelement (24) stabil zu stützen, wenn die Drehwelle (16) in der ersten oder der zweiten stabilen Position (4, 6) angeordnet ist.

7. Maschine (1) nach einem der vorangehenden Ansprüche, bei welcher
- die Nockenvorrichtung (8) Endanschlagflächen (22, 23) aufweist, welche einen Stoppanschlag für die Drehung des mindestens einen bewegbaren Trägers (3) bildet, welcher die erste und die zweite stabile Position (4, 6) begrenzt.

8. Maschine (1) nach einem der vorangehenden Ansprüche, bei welcher
- die Maschine (1) mindestens eine Feder (16) aufweist, welche den mindestens einen bewegbaren Träger (3) konstant in Richtung der ersten und zweiten stabilen Positionen (4, 6) drückt;
und/oder wobei
- die Feder (26) den mindestens einen bewegbaren Träger (3) konstant in die vertikale Richtung /V-V) weg von der Getränkeauslassvorrichtung (2) drückt.

9. Maschine (1) nach einem der vorangehenden Ansprüche, bei welcher
- die Maschine (1) mindestens eine unter der Auslassvorrichtung (2) platzierte Maschinenbasisvorrichtung (15) aufweist, die mindestens in einem Abstand (H) angeordnet ist, der geeignet ist, den großen Behälter (7) zwischen der Maschinenbasisvorrichtung (15) und der Auslassvorrichtung (2) zu platzieren.

10. Maschine (1) nach Anspruch 9, wenn auf Anspruch 5 oder 6 rückbezogen, bei welcher
- die Maschinenbasisvorrichtung (15) mindestens eine Abdeckung (27) aufweist;
- die Abdeckung (27) den Wellensitz (19) aufweist;
- die Abdeckung (27) die Nockenvorrichtung (8) aufweist;
- die Abdeckung (27) ferner eine hinterschnittene Fläche (28) aufweist, welche von der Getränkeauslassvorrichtung (2) abgewandt ist;
- die Drehwelle (16) ein unteres freies Ende (29) aufweist;
- das untere freie Ende (29) einen vergrößerten Kopf (30) aufweist, der quer zur vertikalen Drehachse (V-V) vorsteht;
wobei
- eine vorgespannte Feder (26) zwischen der hinterschnittenen Fläche (28) und dem vergrößerten Kopf (30) vorgesehen ist, welche den Vorsprung oder den Mitnehmer (17) gegen die Nockenvorrichtung (8) drückt, um den bewegbaren Träger (3) in Richtung der ersten und der zweiten stabilen Position (4, 6) zu drücken.

## Revendications

1. Machine de distribution de boissons (1) comprenant:
- au moins un dispositif de sortie (2) pour distribuer ladite boisson,
- au moins un support mobile (3) pour supporter un contenant (5, 7) ; ledit support mobile (3) **supportant** de façon mobile ladite machine de distribution de boissons (1) au moins d'une première position de petit contenant (4) au moins partiellement placé en-dessous dudit dispositif de sortie (2) pour recevoir ladite boisson dans un petit contenant (5) restant sur ledit support mobile (3), à une deuxième position de grand contenant (6) déplacé d'en-dessous dudit dispositif de sortie (2) pour positionner un grand contenant (7) en-dessous dudit dispositif de sortie (2) ;
dans laquelle la machine comprend au moins un dispositif à came (8), dans laquelle ledit au moins un dispositif à came (8) guide la rotation dudit au moins un support mobile (3) entre ladite première position de petit contenant (4) et ladite deuxième position de grand contenant (6) et vice versa,
**caractérisée en ce que** ladite première position de petit contenant (4) et ladite deuxième position de grand contenant (6) sont des positions stables séparées l'une de l'autre par au moins une position instable (9) qui fait, sans efforts extérieurs, ledit au moins un support mobile (3) retourner à la position stable la plus proche entre ladite première position de petit contenant (4) et la deuxième position de grand contenant (6).

2. Machine (1) selon la revendication 1, dans laquelle
- ledit au moins un support mobile (3) comprend un suiveur (10) coopérant avec ledit au moins un dispositif à came (8), et dans laquelle
- ledit au moins un dispositif à came (8) comprend des plans inclinés (11, 12) reliant lesdites première et deuxième positions stables (4, 6) à ladite position instable (9) interposée ; et dans laquelle ladite position instable (9) est agencée plus haut, c'est-à-dire plus proche du dispositif de sortie (2) et lesdites première et deuxième positions stables (4, 6) sont agencées plus bas, c'est-à-dire plus loin dudit dispositif de sortie (2), et/ou dans laquelle
- ledit suiveur (10), au moins pendant la rotation dudit au moins un support mobile (3), coopère avec lesdits plans inclinés (11, 12).

3. Machine (1) selon la revendication 1 ou 2, dans laquelle
- ledit au moins un support mobile (3) est constamment précontraint vers lesdites première et deuxième positions stables (4, 6).

4. Machine (1) selon l'une des revendications précédentes, dans laquelle
- ledit support mobile (3) est rotatif autour d'un axe vertical prédéfini (V-V), et dans laquelle
- ledit support mobile (3) comprend une grille (13) pour tenir une tasse et formant un plan de support horizontal (14), et dans laquelle
- ledit plan de support horizontal (14) est placé à une hauteur prédéfinie (H) d'au moins un dispositif de base de machine ou plateau de machine (15).

5. Machine (1) selon l'une des revendications précédentes, dans laquelle
- ledit au moins un support mobile (3) comprend un axe de rotation (16) définissant un axe de rotation vertical (V-V),
- ledit support mobile (3) comprend au moins une saillie ou suiveur (17),
- ladite saillie ou suiveur (17) comprend au moins une surface de support de suiveur (18), dans laquelle ladite surface de support de suiveur (18) est agencée perpendiculairement à l'axe de rotation vertical (V-V) et orientée à l'opposé du dispositif de sortie de boisson (2),
- ladite machine (1) comprend en outre au moins un dispositif de base de machine ou plateau de machine (15),
- ledit dispositif de base de machine ou plateau de machine (15) comprend au moins un siège d'axe (19) délimité par un bord de siège (20),
- ledit bord de siège (20) comprend ledit dispositif à came (8) formant un chemin de came ou profile de came (21) ayant une surface perpendiculaire audit axe de rotation vertical (V-V) et orientée vers le dispositif de sortie de boisson (2).

6. Machine (1) selon la revendication 5, dans laquelle
- l'axe de rotation (16) comprend un élément de support annulaire (24) à partir duquel ladite saillie ou suiveur (17) s'élève, et dans laquelle
- ledit dispositif à came (8) est délimité à l'intérieur par une surface plate annulaire (25) pour supporter de façon stable ledit élément de support annulaire (24) lorsque ledit axe de rotation (16) est agencé dans une desdites première ou deuxième positions stables (4, 6).

7. Machine (1) selon l'une des revendications précédentes, dans laquelle
- ledit dispositif à came (8) comprend des surfaces d'arrêt (22, 23) formant une butée d'arrêt pour la rotation dudit au moins un support mobile (3) délimitant lesdites première et deuxième positions stables (4, 6).

8. Machine (1) selon l'une des revendications précédentes, dans laquelle
- ladite machine (1) comprend au moins un ressort (26) qui pousse ledit au moins un support mobile (3) constamment vers lesdites première et deuxième positions stables (4, 6), et/ou dans laquelle
- ledit ressort (26) pousse ledit au moins un support mobile (3) constamment dans la direction verticale (V-V) à l'opposé du dispositif de sortie de boisson (2).

9. Machine (1) selon l'une des revendications précédentes, dans laquelle
- ladite machine (1) comprend au moins un dispositif de base de machine (15) placé en-dessous dudit dispositif de sortie (2) agencé au moins à une distance (H) adaptée pour entreposer ledit grand contenant (7) entre ledit dispositif de base de machine (15) et ledit dispositif de sortie (2).

10. Machine (1) selon la revendication 9 si elle dépend de la revendication 5 ou 6, dans laquelle
- ledit dispositif de base de machine (15) comprend au moins un cache (27),
- ledit cache (27) comprend au moins un siège d'axe (19),
- ledit cache (27) comprend ledit dispositif à came (8),
- ledit cache (27) comprend en outre une surface en contre-dépouille (28) orientée à l'opposé du dispositif de sortie de boisson (2),
- ledit axe de rotation (16) comprend une extrémité inférieure libre (29),
- ladite extrémité inférieure libre (29) comprend une tête élargie (30) en saillie transversalement audit axe de rotation vertical (V-V),
dans laquelle
- un ressort précontraint (26) est disposé intercalé entre ladite surface en contre-dépouille (28) et ladite tête élargie (30) poussant ladite saillie ou suiveur (17) contre ledit dispositif à came (8) afin de pousser ledit support mobile (3) vers lesdites première et deuxième positions stables (4, 6).
